# EUROPÄISCHE PATENTSCHRIFT

(11) **EP 2 089 629 B1**
(45) Veröffentlichungstag und Bekanntmachung des Hinweises auf die Patenterteilung: **20.06.2012**
(21) Anmeldenummer: 06818659.2
(22) Anmeldetag: 20.11.2006
(51) Int. Cl.: F02M 55/02, F16L 17/02, F16L 19/02

(54) **DICHTUNGSANORDNUNG IN EINEM HYDRAULISCHEN HOCHDRUCKSYSTEM**
SEALING ARRANGEMENT IN A HYDRAULIC HIGH-PRESSURE SYSTEM
ENSEMBLE DE JOINT D'ÉTANCHÉITÉ DANS UN SYSTÈME HYDRAULIQUE À HAUTE PRESSION

(43) Veröffentlichungstag der Anmeldung: 19.08.2009
(73) Patentinhaber: L'Orange GmbH, 70435 Stuttgart (DE)
(72) Erfinder: SCHEIBE, Wolfgang, 71642 Ludwigsburg-Poppenweiler (DE)
(74) Vertreter: Winter, Josef
(86) Internationale Anmeldenummer: PCT/EP2006/011092
(87) Internationale Veröffentlichungsnummer: WO 2008/061538

(56) Entgegenhaltungen:
- EP-A- 1 298 313
- FR-A- 2 860 058
- GB-A- 2 091 364
- US-A- 3 104 121
- US-A- 3 797 835

## Beschreibung

Die Erfindung betrifft eine Dichtungsanordnung in einem hydraulischen Hochdrucksystem gemäß dem Oberbegriff der Ansprüche 1 oder 14.

Dichtungsanordnungen der vorgenannten Art sind aus der WO 02/14680 Al bekannt, und zwar in Verbindung mit als Common-Rail-Systemen bezeichneten Hochdruckspeicher-Einspritzsystemen, bei denen der rohrförmige Hochdruckspeicher, von dem die Einspritzleitungen zu den einzelnen, jeweils einem Zylinder zugeordneten Injektoren ausgehen, einen Druckraum bildet, der axial über eine Verschraubung verschlossen ist, der eine durch einen Magneten gebildete Einrichtung zum Abschalten von Verunreinigungen zugeordnet ist. Die Verschraubung umfasst einen Dichtkörper, der gegen den Druckraum in einem Dichtkegel ausläuft, dem seitens des Speichergehäuses ein sich gegen den Dichtkegel öffnender Dichtkonus zugeordnet ist. Dichtkegel und Dichtkonus weisen zueinander korrespondierende Dichtflächen auf, die durch Anziehen der Verschraubung so weit gegeneinander verpresst werden müssen, dass sich eine dichtende Verbindung auch in Berücksichtigung zu beherrschender Temperaturunterschiede und sonstiger Beanspruchungen, insbesondere auch Schwingungsbeanspruchungen ergibt. In Berücksichtigung der sehr hohen Drücke, wie sie beispielsweise in Hochdruckspeicher-Einspritzsystemen gegeben sind, bedingt dies sehr hohe Spannkräfte.

Aus der österreichischen Patentschrift Nr. 223876 ist eine Dichtungsanordnung für sehr hohe Drücke und Temperaturen, insbesondere in Form einer Zylinderkopfdichtung für Brennkraftmaschinen, bekannt, die in dem radialen Dichtspalt zwischen Zylindergehäuse und Zylinderkopf liegt und dort durch axiale Verspannung fixiert ist. Im Hinblick auf die Ausbildung des Zylindergehäuses mit nassen, in den Zylindermantel eingesetzten Laufbüchsen ist die im Radialspalt liegende Dichtung in eine Flachdichtung zwischen Zylindermantel und Zylinderkopf und in eine die Zylinderbohrung umschließende Ringdichtung zwischen Zylinderkopf und Laufbüchse unterteilt. Dieser Ringdichtung ist seitens der Stirnfläche der Laufbüchse eine radial nach innen auf die Zylinderbohrung zu kegelig abfallende Anlagefläche zugeordnet, welche radial innen durch einen axial in der Stirnfläche auslaufenden Ringsteg begrenzt ist, der bei der axialen Verspannung ein Abdrängen des Dichtringes in Richtung auf die Zylinderbohrung verhindert. Der Neigungswinkel der kegeligen Anlagefläche für die Ringdichtung ist so gewählt, dass die durch den Winkel gegebene Zentralkomponente der Anpresskräfte kleiner ist als die die Dichtung haltende Reibkraft, so dass die Dichtung auch nach Wegfall der diese radial nach außen abdrängenden Gaskräfte ihre Lage beibehält.

In der US 3 104 121 A ist eine Dichtkegelverbindung dargestellt, bei der ein Ringspalt durch einen in einem Dichtkonus angeordneten Dichtkegel gebildet wird. Der Ringspalt wird entgegen der Einsteckrichtung des Dichtkegels schmaler. In dem Ringspalt befindet sich ein Dichtring, der entgegen der Einsteckrichtung des Dichtkegels druckbeaufschlagt ist. Der Dichtkegel weist Bereiche mit unterschiedlichen Kegelwinkeln auf.

In der US 3 797 835 A ist eine der US 3 104 121 A entsprechende Dichtungsanordnung gezeigt.

Die GB 2 091 364 A zeigt Dichtungsanordnungen mit in einem Ringspalt gelegenem Dichtring. In einer Ausführungsform ist ein Ringspalt vorgesehen, der sich entgegen der Einsteckrichtung verjüngt. Zur Fixierung der Dichtung sind in dem den Dichtkonus bildenden Gehäuse Radialnuten vorgesehen.

Der Erfindung liegt die Aufgabe zugrunde, eine Dichtungsanordnung der eingangs genannten Art so auszubilden, dass sich auch bei verhältnismäßig kleinen Spannkräften und ungeachtet sonstiger Beanspruchungen eine zuverlässige Abdichtung erreichen lässt.

Erreicht wird dies mit einer Dichtungsanordnung sowohl gemäß den Merkmalen des Anspruches 1 wie auch gemäß den Merkmalen des Anspruches 14.

Ausgangspunkt ist jeweils eine Dichtungsanordnung mit einem in einer Verbindung zu einem Druckraum liegenden Dichtkonus, wobei der Dichtkonus sich einmal in Richtung auf den Druckraum verjüngt, und zum anderen sich zulaufend auf den Druckraum aufweitet. In beiden Fällen greift in den Dichtkonus ein Dichtkegel ein, und zwar derart, dass zwischen Dichtkonus und Dichtkegel ein Ringspalt verbleibt, in den ein Dichtring einzusetzen ist, der ausgehend vom Druckraum druckbeaufschlagt ist, so dass bei sich entgegen der Einsteckrichtung des Dichtkegels verringerndem Ringquerschnitt durch die Druckbeaufschlagung eine dichtende Verpressung des Dichtringes in dem Ringspalt ergibt.

Bei gegen den Druckraum sich verjüngendem Dichtkonus ist hierfür Voraussetzung, dass der Ringspalt sich entgegen der Einsteckrichtung des Dichtkegels in den Dichtkonus verjüngt, somit zumindest im Aufnahmebereich für den Dichtring entgegen der Einsteckrichtung aufeinander zulaufende Ringflächen aufweist.

Bei ausgehend vom Druckraum sich erweiterndem Dichtkonus und in diesen hineinragendem Dichtkegel ergibt sich eine Verringerung des Ringquerschnittes in Einsteckrichtung des Dichtkegels zwingend nicht nur bei sich in Einsteckrichtung verjüngendem Ringspalt, sondern gegebenenfalls auch bei parallelem Verlauf der jeweiligen Dichtflächen, das heißt bei gleicher Größe des Kegelwinkels des Dichtkegels und des Konuswinkels des Dichtkonus, da mit zunehmender Einstecktiefe des Dichtkegels in den ausgehend vom Druckraum sich verjüngenden Dichtkonus der Ringquerschnitt des den Dichtring aufnehmenden Ringspaltes kleiner wird.

Bevorzugt kann bei den erfindungsgemäßen Lösungen der Neigungswinkel zwischen den den Ringspalt begrenzendem Kegel- bzw. Konusflächen so gewählt werden, dass der Dichtring seine durch Druckbeaufschlagung erreichte Endstellung aufgrund der Reibung zu den Anlageflächen von Dichtkegel und Dichtkonus auch dann beibehält, wenn die vom Druckraum ausgehende Druckbeaufschlagung des Dichtringes entfällt.

Um die Verschiebung des Dichtringes im Ringspalt zu begrenzen sowie den Dichtring im Ringspalt auszurichten, erweist es sich als zweckmäßig, wenn der der Druckbeaufschlagung entsprechende Verschiebeweg im Ringspalt anschlagbegrenzt ist, wobei die Anschlagbegrenzung durch eine Schulter gebildet sein kann oder auch durch anderweitige Verjüngung des Ringspaltes.

Ferner erweist es sich als zweckmäßig, den Dichtring beim Einfahren des Dichtkegels in den Dichtkonus über eine Ringschulter am Dichtkonus und/oder am Dichtkegel auf eine Solllage auszurichten und in dieser Solllage im Ringspalt zu verspannen, so dass für eine nachfolgende Verlagerung des Dichtringes aufgrund der Druckbeaufschlagung aus dem Druckraum eine Ausgangslage vorgegeben ist, die sich auch als Auffangstellung darstellt, falls der Dichtring nach Druckentlastung sich im Ringspalt gegebenenfalls verlagert.

Im Rahmen der Erfindung bildet der sich in Richtung auf den Druckraum verjüngende Dichtkegel einen Teil eines Dichtkörpers bilden, der einen den Dichtkegel tragenden und radial übergreifenden, axial gegen ein den Dichtkonus enthaltendes Bauteil zu verspannenden Ringbund aufweist, so dass eine vom Dichtring unabhängige Abstützung des Dichtkörpers gegen das den Dichtkonus enthaltende Bauteil möglich wird, was zum Beispiel im Hinblick auf Schwingungsbelastungen eine Entlastung des Dichtringes bedeutet.

Im Rahmen der Erfindung liegen auch Ausgestaltungen, bei denen ein Dichtkörper vorgesehen ist, der zwei gleichachsig hintereinander liegende Dichtkegel aufweist, zu denen Dichtkonen korrespondieren, so dass sich hintereinander liegende Dichtzonen ergeben.

Im Rahmen der Erfindung liegen auch Ausgestaltungen, bei denen der Druckraum im Überdeckungsbereich zu dem Zwischenraum zwischen den mit Abstand hintereinander liegenden Dichtkegel liegt, so dass sich ausgehend vom Druckraum nach entgegengesetzten Richtungen öffnende Dichtkonen ergeben. Zweckmäßig können derartige Anordnungen beispielsweise sein, wenn ein dichtender Abschluss einer einen Druckraum durchsetzenden Querbohrung erforderlich ist.

Weitere Einzelheiten und Merkmale der Erfindung ergeben sich aus den Ansprüchen. Ferner wird die Erfindung nachstehend anhand von Ausführungsbeispielen erläutert. Es zeigen:
- Fig. 1 und 2: eine Dichtungsanordnung gemäß der Erfindung mit einem Bauteil, das einen auf einen Druckraum zulaufenden Dichtkonus aufweist, in den ein einem Dichtkörper zugehöriger Dichtkegel unter Bildung eines Ringspaltes eingreift, in dem ein Dichtring liegt, wobei der Dichtkörper über eine Verschraubung gegen das den Dichtkonus enthaltende Bauteil verspannt ist und wobei Fig. 1 die Dichtungsanordnung vor und Fig. 2 nach Aufbringen von Druck im Druckraum zeigt,
- Fig. 3 und 4: den Fig. 1 und 2 entsprechende Dichtungsanordnungen, wiederum vor und nach Aufbringen vom Druck im Druckraum,
- Fig. 5: eine der Fig. 2 entsprechende Gestaltung der Dichtungsanordnung bei sich über die Länge des Ringspaltes zwischen Dichtkonus und Dichtkegel veränderndem Kegelwinkel des Dichtkegels, und
- Fig. 6: eine Dichtungsanordnung gemäß der Erfindung, bei der ein Druckraum nach gegenüberliegenden Seiten durch konzentrische Dichtungsanordnungen gemäß der Erfindung abgegrenzt ist.

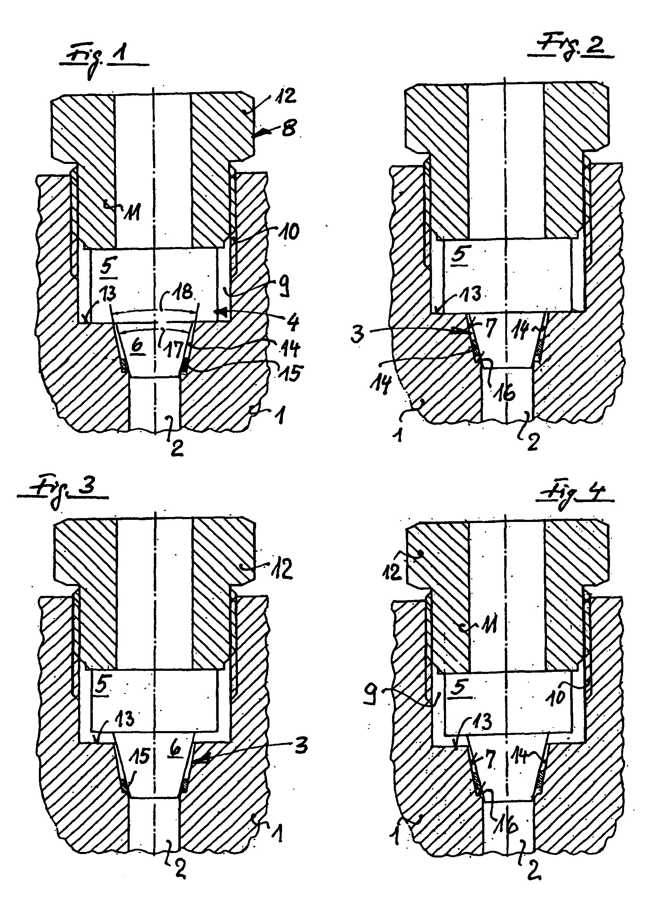

In den Fig. 1 bis 5 ist ein Bauteil 1 gezeigt, das einen Druckraum 2 aufnimmt, wobei ein solches Bauteil 1 beispielsweise durch den rohrförmigen Druckspeicher eines Speicher-Einspritzsystemes gebildet sein kann, dem für eine Anschlussöffnung eine Dichtungsanordnung 3 zugeordnet ist. Die Dichtungsanordnung 3 umfasst einen Dichtkörper 4, der einen Ringbund 5 und koaxial zu diesem einen Dichtkegel 6 aufweist, der in einen Dichtkonus 7 hineinragt, der in Richtung auf den Druckraum 2 sich verjüngend im Bauteil 1 vorgesehen ist, das zur Aufnahme des Ringbundes 5 und einer den Ringbund 5 beaufschlagenden Verschraubung 8 mit einer zum Dichtkörper 4 koaxialen Aufnahmeöffnung versehen ist, die auslaufend mit einem Gewinde 10 versehen ist, zu dem seitens der Verschraubung 8 der Gewindehals 11 einer Bundmutter 12 korrespondiert. Durch den Gewindehals 11 der in die Aufnahmeöffnung 9 eingeschraubten Bundmutter 12 wird der Ringbund 5 des Dichtkörpers 4 gegen die Bodenfläche 13 der Aufnahmeöffnung 9 verspannt, bei Eingriff des Dichtkegels 6 in den Dichtkonus 7 unter Bildung eines Ringspaltes 14, in dem ein Dichtring 15 liegt, der über den Dichtkegel 6 gegen den Dichtkonus 7 verspannt ist.

Der Dichtkonus 7 endet auslaufend auf den Druckraum 2 in einer radial nach innen vorspringenden Stufe 16, die als Anlage für den in den Dichtkonus 7 eingesetzten Dichtring 15 dient, so dass beim Einfahren des Dichtkegels 6 in den Dichtkonus 7 der Dichtring 15 zwischen Dichtkegel 6 und Dichtkonus 7 radial verspannt wird.

Der Dichtkegel 6 weist einen Kegelwinkel 17 auf, der etwas größer als der Konuswinkel 18 des den Dichtkegel 6 aufnehmenden Dichtkonus 7 ist, wobei die Winkel 17 und 18 in den Ausführungsbeispielen gemäß Fig. 1 bis 4 so bemessen sind, dass über die Eingriffstiefe des Dichtkegels 6 in den Dichtkonus 7 der Dichtkegel 6 zum Dichtkonus 7 berührungsfrei bleibt und sich ein durchgehender Ringspalt 14 ergibt.

Fig. 1 zeigt die Montagesituation nach Verspannung des Dichtkörpers 4 über die Verschraubung 8 und entsprechender radialer Verspannung des Dichtringes 15 zwischen Dichtkegel 6 und Dichtkonus 7, wobei der auf der Stufe 16 abgestützte Dichtring 15 durch den einfahrenden Dichtkegel 6 gegen den Dichtkonus 7 aufgeweitet und zwischen Dichtkegel 6 und Dichtkonus 7 dichtend eingespannt wird. Entsprechend besteht der Dichtring 15 aus einem weicheren, insbesondere metallischem Material als der Dichtkörper und das Bauteil 1 zumindest in seinem den Dichtkonus 7 enthaltenden Bereich.

Der Ringspalt 14 verjüngt sich entgegen der Einsteckrichtung des Dichtkegels 6 in den Dichtkonus 7 und weist einen Ringquerschnitt auf, der sich trotz Vergrößerung des mittleren Durchmessers des Ringspaltes 14 entgegen der Einsteckrichtung des Dichtkonus 6 verringert. Wird ausgehend von der Situation gemäß Fig. 1 Hochdruck im Druckraum 2 aufgebaut, so bleibt, wie Fig. 2 zeigt, ungeachtet der Druckbeaufschlagung die axiale Lage des Dichtkegels 6 zum Dichtkonus 7 aufgrund der Fixierung über die Verschraubung 8 unverändert. In Abhängigkeit von der Höhe der Druckbeaufschlagung ergibt sich aber für den Dichtring 15 eine axiale Verlagerung im Ringspalt 14, wobei der Dichtring 15 bei sich verengendem Ringquerschnitt des Ringspaltes 14 in diesen hineingedrückt wird, so dass sich mit zunehmendem Druck auch eine Vergrößerung der Abstützkraft für den Dichtring 14 ergibt.

Aufgrund der Abstützung des Dichtkörpers 4 gegen das Bauteil 1 einerseits mittelbar über den Dichtring 14 und andererseits direkt durch die Anlage des Ringbundes 5 an der Bodenfläche 13 der Aufnahmeöffnung 9 lässt sich eine Verspannung des Dichtkörpers 4 gegen das Bauteil 1 erreichen, die von der Abstützung des Dichtkegels 6 gegen den Dichtkonus 7 über den Dichtring 15 weitgehend unabhängig ist, so dass Schwingungsbeanspruchungen oder sonstige mechanische Belastungen abgefangen bzw. aufgenommen werden können, ohne die über den Dichtring 15 erfolgende Abddichtung zu beeinträchtigen.

Andererseits muss im Rahmen der erfindungsgemäßen Dichtungsanordnung eine solche, von dem Dichtring 15 unabhängige Verspannung des Dichtkörpers 4 gegenüber dem Bauteil 1 im Rahmen der Erfindung nicht gegeben sein, wie die Fig. 3 und 4 zeigen, wenn Belastungen, wie sie über die Verspannung abzufangen sind, keine wesentliche Rolle spielen.

Insbesondere von Vorteil ist eine Ausgestaltung gemäß den Fig. 1 bis 4 auch bei Lösungen, bei denen die Dichtungsanordnung 3 Bestandteil eines Leitungsweges ist, beispielsweise mit einem zentral durch den Dichtkörper 4 verlaufenden Leitungsweg in Form einer zentralen Bohrung, über die sich beispielsweise eine gedrosselte Verbindung zum Druckraum herstellen lässt, wie sie unter anderem zum Anschluss von Steuerleitungen, Messaggregaten oder dergleichen zweckmäßig sein kann.

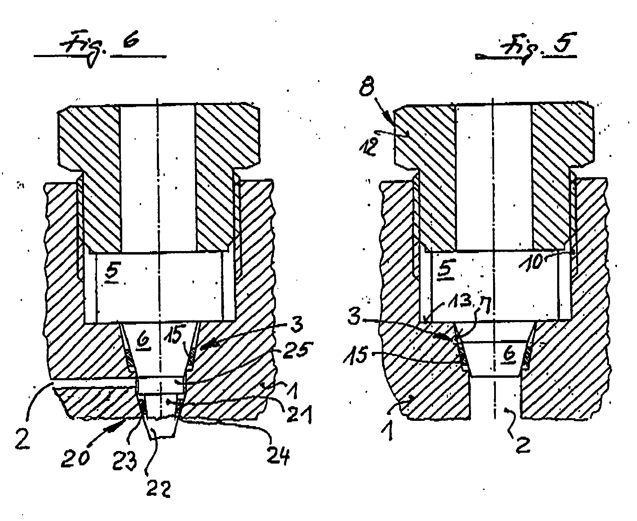

Fig. 5 zeigt eine der Fig. 2 im Wesentlichen entsprechende Darstellung bei über den unter Druck stehenden Druckraum beaufschlagter Dichtungsanordnung und im Ringspalt 14 aufgrund der Druckbeaufschlagung von der Anschlagstufe 16 abgehobenem Dichtring 15. Die erfindungsgemäß vorgesehene Verringerung des Ringquerschnittes des Ringspaltes 14 entgegen der Einsteckrichtung des Dichtkegels 6 in den Dichtkonus 7 ist hierbei von der Differenz zwischen Kegelwinkel 17 und Konuswinkel 18 bei über die Länge des Dichtkegels 6 bzw. des Dichtkonus 7 durchlaufend gleichem Kegel- bzw. Konuswinkel, entsprechend den Darstellungen gemäß Fig. 1 bis 4, dadurch gewährleistet, dass der Dichtkegel 6 im Bereich seines fußseitigen Endes mit vergrößertem Kegelwinkel ausgeführt ist, so dass sich eine Verengung des Ringspaltes 14 ergibt. In entsprechender Weise ist es grundsätzlich auch möglich, den Konuswinkel des Dichtkonus 7 auslaufend auf das vom Druckraum 2 abgelegene Ende zu verringern, soweit sich hierdurch keine Hinterschneidungen ergeben. Auch eine Kombination von Vergrößerung des Kegelwinkels und Verringerung des Konuswinkels liegt im Rahmen der erfindungsgemäßen Möglichkeiten. Weiter ist es im Rahmen der Erfindung auch möglich, über die Länge des Ringspaltes 4 durch verlaufende Änderung von Konuswinkel und/oder Kegelwinkel eine Verringerung des Ringquerschnittes entgegen der Einsteckrichtung des Dichtkegels zu erreichen.

In Fig. 6 ist eine Ausgestaltung veranschaulicht, bei der ein Grundaufbau der Dichtungsanordnung 3 gemäß Fig. 1 und 2 mit einer weiteren koaxialen Dichtungsanordnung 20 kombiniert ist und bei der der Druckraum 2 zwischen der Dichtungsanordnung 3 und der hierzu koaxialen Dichtungsanordnung 20 liegt.

Die Dichtungsanordnung 20 weist im Gegensatz zum Dichtungsanordnung 3, bei der der Dichtkegel 6 entgegen seiner Einsteckrichtung in den Dichtkonus 7 ausgehend vom Druckraum 2 in Fig. 1 und 2, bzw. vom Druckraum 2 in Fig. 6 druckbeaufschlagt ist, einen Dichtkegel 21 auf, der in Einsteckrichtung in den Dichtkonus 22 druckbeaufschlagt ist, so dass sich eine Druckbeaufschlagung des Dichtringes 23 in den sich in Einsteckrichtung des Dichtkegels 21 verjüngenden Ringspalt 24 ergibt.

Für den Dichtring 23 erweist sich auch bei dieser Lösung eine Ausgangsanschlaglage als zweckmäßig, die dadurch realisiert ist, das im Übergang zwischen den Dichtkegeln 6 und 21 ein Zwischenstück 25 liegt, gegenüber dem der Dichtkegel 21 fußseitig im Durchmesser verringert ist, so dass sich eine Anschlagschulter für den Dichtring 23 ergibt.

Eine Dichtungsanordnung 20 mit ausgehend vom Druckraum 2 auf seine Dichtlage druckbeaufschlagten Dichtkegel 21 und mit gegenüber dem Konuswinkel kleineren Kegelwinkel kann auch unabhängig von einer Dichtungsanordnung 3, also als alleinstehende Dichtungsanordnung eingesetzt werden und erweist sich beispielsweise als zweckmäßig, wenn eine über den im Druckraum anstehenden Druck sich im Wesentlichen selbstverspannende Dichtungsanordnung realisiert werden soll.

## Patentansprüche

1. Dichtungsanordnung in einem hydraulischen Hochdrucksystem, mit einem Druckraum, einem in einer Verbindung zum Druckraum liegenden Dichtkonus, der sich in Richtung auf den Druckraum verjüngt, und einem zum Dichtkonus korrespondierenden, entgegen seiner Einsteckrichtung in den Dichtkonus ausgehend vom Druckraum druckbeaufschlagten, einen Dichtkegel umfassenden Dichtkörper, wobei - in Dichtlage - der Dichtkonus (7) und der in diesen hineinragende Dichtkegel (6) einen sich entgegen der Einsteckrichtung des Dichtkegels (6) verjüngenden Ringspalt (14) einschließen, dessen Ringquerschnitt sich entgegen der Einsteckrichtung des Dichtkegels (6) verringert und wobei in dem Ringspalt (14), verspannt zwischen Dichtkegel (6) und Dichtkonus (7), ein Dichtring (15) entgegen der Einsteckrichtung des Dichtkegels (6) druckbeaufschlagt angeordnet ist ,
**dadurch gekennzeichnet,**
**dass** der Dichtkörper (4) einen den Dichtkegel (6) tragenden und radial übergreifenden, axial gegen ein den Dichtkonus (7) enthaltendes Bauteil (1) zu verspannenden Ringbund (5) aufweist, und dass der Ringbund (5) gegen eine umschließend zum Dichtkonus (7) liegende Anlagefläche des Bauteiles (1) zu verspannen ist.

2. Dichtungsanordnung nach Anspruch 1,
**dadurch gekennzeichnet,**
**dass** der Dichtkonus (7) in seinem verjüngten, gegen den Druckraum (2) zulaufenden Bereich eine Anschlagstufe (16) für den Dichtring (15) aufweist.

3. Dichtungsanordnung nach Anspruch 2,
**dadurch gekennzeichnet,**
**dass** - in Dichtlage - die Anschlagstufe (16) im Übergangsbereich zum gegen den Druckraum (2) auslaufenden, verjüngten und kopfseitigen Ende des Dichtkegels (6) liegt.

4. Dichtungsanordnung nach einem der vorhergehenden Ansprüche,
**dadurch gekennzeichnet,**
**dass** der Dichtkegel (6) Bereiche unterschiedlichen Kegelwinkels (17) aufweist.

5. Dichtungsanordnung nach Anspruch 4,
**dadurch gekennzeichnet,**
**dass** in dem entgegen der Einsteckrichtung rückwärtigen, fußseitigen Ende des Dichtkegels (6) dessen Kegelwinkel (17) größer ist als in seinem gegenüberliegenden, kopfseitigen Bereich.

6. Dichtungsanordnung nach einem der Ansprüche 1 bis 5,
**dadurch gekennzeichnet,**
**dass** der Dichtkonus (7) Bereiche mit unterschiedlichem Konuswinkel (18) aufweist.

7. Dichtungsanordnung nach Anspruch 6,
**dadurch gekennzeichnet,**
**dass** der Dichtkonus (7) im Bereich seines größeren Durchmesser aufweisenden, auslaufseitigen Endes einen kleineren Konuswinkel (18) aufweist als in seinem gegenüberliegenden Bereich.

8. Dichtungsanordnung nach einem der Ansprüche 4 bis 7,
**dadurch gekennzeichnet,**
**dass** der Dichtring (15) druckbeaufschlagt über den Bereich des Ringspaltes (14) verlagerbar ist, der auf den im Kegelwinkel (17) vergrößerten und/oder im Konuswinkel (18) verkleinerten Bereich des Ringspaltes (14) ausläuft.

9. Dichtungsanordnung nach einem der vorhergehenden Ansprüche,
**dadurch gekennzeichnet,**
**dass** die Anlagefläche (Bodenfläche 13) senkrecht zur Achse des Dichtkonus (7) verläuft.

10. Dichtungsanordnung nach einem der vorhergehenden Ansprüche,
**dadurch gekennzeichnet,**
**dass** der Dichtkegel (6) über ein Zwischenstück (25) mit einem vorgelagerten, koaxial liegenden weiteren Dichtkegel (21) verbunden ist, der in einen bauteilseitigen Dichtkonus (22) eingreift.

11. Dichtungsanordnung nach Anspruch 10,
**dadurch gekennzeichnet,**
**dass** das Zwischenstück (25) im Bereich eines Übergangsraumes (Druckraum 2) liegt, der hochdruckbeaufschlagt ist.

12. Dichtungsanordnung nach Anspruch 10 oder 11,
**dadurch gekennzeichnet,**
**dass** über die beiderseits des Zwischenstückes (15) liegenden Dichtkegel (6; 21) und die zu diesen korrespondierenden Dichtkonen (7; 23) sich in entgegengesetzten Richtungen im Querschnitt verjüngende Ringspalte (14; 24) begrenzt sind und dass die in den Ringspalten (14; 24) liegenden Dichtringe (15; 23) in zueinander entgegengesetzten Richtungen druckbeaufschlagt sind.

13. Dichtungsanordnung nach einem der Ansprüche 10 bis 12,
**dadurch gekennzeichnet,**
**dass** das Zwischenstück (25) einen größeren Durchmesser aufweist als der vom Zwischenstück (25) ausgehende, weitere Dichtkegel (21) in seinem an das Zwischenstück (25) anschließende Fußbereich.

14. Dichtungsanordnung in einem hydraulischen Hochdrucksystem, mit einem Druckraum, einem in einer Verbindung zum Druckraum liegenden Dichtkonus, und einem zum Dichtkonus korrespondierenden, ausgehend vom Druckraum druckbeaufschlagten, in den Dichtkonus hineinragenden, einen Dichtkegel umfassenden Dichtkörper, dass - in Dichtlage - der Dichtkonus (22) und der in diesen hineinragende Dichtkegel (21) einen Ringspalt (24) einschließen, dessen Ringquerschnitt sich in Einsteckrichtung des Dichtkegels 21 verringert und dass in dem Ringspalt (24), verspannt zwischen dem Dichtkegel (21) und dem Dichtkonus (22), ein Dichtring (23) in Erstreckungsrichtung des Dichtkegels (21) druckbeaufschlagt angeordnet ist,
**dadurch gekennzeichnet,**
**dass** sich der Dichtkonus (22) in Richtung auf den Druckraum (2) erweitert.

15. Dichtungsanordnung nach Anspruch 14,
**dadurch gekennzeichnet,**
**dass** der Kegelwinkel des Dichtkegels (21) kleiner ist als der Konuswinkel des Dichtkonus (22).

16. Dichtungsanordnung nach Anspruch 15,
**dadurch gekennzeichnet,**
**dass** der Kegelwinkel des Dichtkegels (21) und der Konuswinkel des Dichtkonus (22) etwa gleiche Größe aufweisen, insbesondere gleich groß sind.

17. Dichtungsanordnung nach einem der Ansprüche 14 bis 16,
**dadurch gekennzeichnet,**
**dass** der Dichtkegel (21) Bereiche unterschiedlichen Kegelwinkels aufweist.

18. Dichtungsanordnung nach Anspruch 17,
**dadurch gekennzeichnet,**
**dass** in dem entgegen der Einsteckrichtung rückwärtigen, fußseitigen Ende des Dichtkegels (21) dessen Kegelwinkel größer ist als in seinem gegenüberliegenden, kopfseitigen Bereich.

19. Dichtungsanordnung nach einem der Ansprüche 14 bis 18,
**dadurch gekennzeichnet,**
**dass** der Dichtkonus (22) Bereiche mit unterschiedlichem Konuswinkel aufweist.

20. Dichtungsanordnung nach Anspruch 19,
**dadurch gekennzeichnet,**
**dass** der Dichtkonus (22) im Bereich seines kleineren Durchmesser aufweisenden, auslaufseitigen Endes einen kleineren Konuswinkel aufweist als in seinem gegenüberliegenden Endbereich.

21. Dichtungsanordnung nach einem der Ansprüche 14 bis 20,
**dadurch gekennzeichnet,**
**dass** der Dichtring (23) druckbeaufschlagt über den Bereich des Ringspaltes (24) verlagerbar ist, der auf den im Kegelwinkel kleineren und/oder im Konuswinkel größeren Bereich des Ringspaltes (24) ausläuft.

22. Dichtungsanordnung nach einem der Ansprüche 14 bis 21,
**dadurch gekennzeichnet,**
**dass** der Dichtkegel (21) und/oder der Dichtkonus (22) mit einer radialen Anschlagstufe für den Dichtring (23) versehen sind.

23. Dichtungsanordnung nach einem der vorhergehenden Ansprüche,
**dadurch gekennzeichnet,**
**dass** der Dichtring (15; 23) viereckigen, insbesondere rechteckigen Querschnitt aufweist.

## Claims

1. Sealing arrangement in a hydraulic high-pressure system, having a pressure space, a sealing taper, which is situated in a connection to the pressure space and tapers in a direction towards the pressure space, and a sealing body, which comprises a sealing cone, corresponds to the sealing taper and is subjected to pressure from the pressure space counter to the direction of insertion thereof into the sealing taper, wherein - in the sealing position - the sealing taper (7) and the sealing cone (6) projecting into the latter enclose an annular gap (14), which tapers counter to the direction of insertion of the sealing cone (6) and the annulus cross section of which decreases counter to the direction of insertion of the sealing cone (6), and wherein a sealing ring (15) is arranged in the annular gap (14), being clamped between the sealing cone (6) and the sealing taper (7) and being subjected to pressure counter to the direction of insertion of the sealing cone (6), **characterized in that** the sealing body (4) has an annular collar (5), which carries and radially overlaps the sealing cone (6) and can be clamped axially against a component (1) containing the sealing taper (7), and **in that** the annular collar (5) can be clamped against a contact surface of the component (1), which surface is situated so as to surround the sealing taper (7).

2. Sealing arrangement according to Claim 1, **characterized in that** the sealing taper (7) has a stop step (16) for the sealing ring (15) in its tapered region, which narrows towards the pressure space (2).

3. Sealing arrangement according to Claim 2, **characterized in that** - in the sealing position - the stop step (16) lies in the region of transition to the tapered head end of the sealing cone (6), which end runs out towards the pressure space (2).

4. Sealing arrangement according to one of the preceding claims, **characterized in that** the sealing cone (6) has regions of different cone angle (17).

5. Sealing arrangement according to Claim 4, **characterized in that**, in the foot end of the sealing cone (6), that towards the rear counter to the direction of insertion, the cone angle (17) of said cone is larger than in the opposite, head region thereof.

6. Sealing arrangement according to one of Claims 1 to 5, **characterized in that** the sealing taper (7) has regions of different taper angle (18).

7. Sealing arrangement according to Claim 6, **characterized in that** the sealing taper (7) has a smaller taper angle (18) in the region of its run-out end, which has a larger diameter, than in the opposite region thereof.

8. Sealing arrangement according to one of Claims 4 to 7, **characterized in that** the sealing ring (15) can be shifted under pressure over the region of the annular gap (14) which runs out onto the region of the annular gap (14) which has an enlarged cone angle (17) and/or a reduced taper angle (18).

9. Sealing arrangement according to one of the preceding claims, **characterized in that** the contact surface (bottom surface 13) is perpendicular to the axis of the sealing taper (7).

10. Sealing arrangement according to one of the preceding claims, **characterized in that** the sealing cone (6) is connected by way of an intermediate piece (25) to a further, coaxially situated sealing cone (21) arranged further forwards, which engages in a sealing taper (22) in the component.

11. Sealing arrangement according to Claim 10, **characterized in that** the intermediate piece (25) is situated in the region of a transitional space (pressure space 2), which is subjected to high pressure.

12. Sealing arrangement according to Claim 10 or 11, **characterized in that** annular gaps (14; 24), which taper in cross section in opposite directions, are delimited by the sealing cones (6; 21) situated on both sides of the intermediate piece (25) and by the sealing tapers (7; 23) corresponding to said cones, and **in that** the sealing rings (15; 23) situated in the annular gaps (14; 24) are subjected to pressure in mutually opposite directions.

13. Sealing arrangement according to one of Claims 10 to 12, **characterized in that** the intermediate piece (25) has a larger diameter than the further sealing cone (21) starting from the intermediate piece (25), in the foot region thereof adjoining the intermediate piece (25).

14. Sealing arrangement in a hydraulic high-pressure system, having a pressure space, a sealing taper, which is situated in a connection to the pressure space, and a sealing body, which comprises a sealing cone, corresponds to the sealing taper, is subjected to pressure from the pressure space and projects into the sealing taper, wherein - in the sealing position - the sealing taper (22) and the sealing cone (21) projecting into the latter enclose an annular gap (24), the annulus cross section of which decreases in the direction of insertion of the sealing cone (21), and wherein a sealing ring (23) is arranged in the annular gap (24), being clamped between the sealing cone (21) and the sealing taper (22) and being subjected to pressure in the direction of extension of the sealing cone (21), **characterized in that** the sealing taper (22) widens in a direction towards the pressure space (2).

15. Sealing arrangement according to Claim 14, **characterized in that** the cone angle of the sealing cone (21) is smaller than the taper angle of the sealing taper (22).

16. Sealing arrangement according to Claim 15, **characterized in that** the cone angle of the sealing cone (21) and the taper angle of the sealing taper (22) are of approximately the same size, in particular are the same size.

17. Sealing arrangement according to one of Claims 14 to 16, **characterized in that** the sealing cone (21) has regions of different cone angle.

18. Sealing arrangement according to Claim 17, **characterized in that**, in the foot end of the sealing cone (21), that towards the rear counter to the direction of insertion, the cone angle of said cone is larger than in the opposite, head region thereof.

19. Sealing arrangement according to one of Claims 14 to 18, **characterized in that** the sealing taper (22) has regions of different taper angle.

20. Sealing arrangement according to Claim 19, **characterized in that** the sealing taper (22) has a smaller taper angle in the region of its run-out end, which has a smaller diameter, than in the opposite end region thereof.

21. Sealing arrangement according to one of Claims 14 to 20, **characterized in that** the sealing ring (23) can be shifted under pressure over the region of the annular gap (24) which runs out onto the region of the annular gap (24) which has a smaller cone angle and/or a larger taper angle.

22. Sealing arrangement according to one of Claims 14 to 21, **characterized in that** the sealing cone (21) and/or the sealing taper (22) are provided with a radial stop step for the sealing ring (23).

23. Sealing arrangement according to one of the preceding claims, **characterized in that** the sealing ring (15; 23) has a quadrilateral, in particular rectangular cross section.

## Revendications

1. Agencement d'étanchéité dans un système hydraulique haute pression, comprenant un espace de pression, un cône d'étanchéité en liaison avec l'espace de pression, qui se rétrécit dans la direction de l'espace de pression, et un corps d'étanchéité correspondant au cône d'étanchéité, sollicité en pression à l'encontre de son sens d'insertion dans le cône d'étanchéité depuis l'espace de pression, et comprenant une partie d'étanchéité conique, où, dans la position d'étanchéité, le cône d'étanchéité (7) et la partie d'étanchéité conique (6) pénétrant dans celui-ci forment entre eux un interstice annulaire (14) se rétrécissant dans le sens opposé au sens d'insertion de la partie d'étanchéité conique (6), la section transversale annulaire de l'interstice annulaire diminuant dans le sens opposé au sens d'insertion de la partie d'étanchéité conique (6) et où, dans l'interstice annulaire (14), est disposée une bague d'étanchéité (15) serrée entre la partie d'étanchéité conique (6) et le cône d'étanchéité (7), sollicitée en pression à l'encontre du sens d'insertion de la partie d'étanchéité conique (6),
**caractérisé en ce que**
le corps d'étanchéité (4) présente un épaulement annulaire (5) portant la partie d'étanchéité conique (6) et venant en prise radialement pardessus celle-ci, devant être serré axialement contre un composant (1) contenant le cône d'étanchéité (7), et **en ce que** l'épaulement annulaire (5) doit être serré contre une surface d'appui du composant (1) entourant le cône d'étanchéité (7).

2. Agencement d'étanchéité selon la revendication 1,
**caractérisé en ce que**
le cône d'étanchéité (7) présente, dans sa région rétrécie, convergeant vers l'espace de pression (2), un étage de butée (16) pour la bague d'étanchéité (15).

3. Agencement d'étanchéité selon la revendication 2,
**caractérisé en ce que**
dans la position d'étanchéité, l'étage de butée (16) se situe dans la région de transition à l'extrémité de la partie d'étanchéité conique (6) rétrécie et située du côté de la tête, débouchant vers l'espace de pression (2).

4. Agencement d'étanchéité selon l'une quelconque des revendications précédentes,
**caractérisé en ce que**
la partie d'étanchéité conique (6) présente des régions d'angles de conicité différents (17).

5. Agencement d'étanchéité selon la revendication 4,
**caractérisé en ce que**
l'angle de conicité (17) dans l'extrémité côté base de la partie d'étanchéité conique (6), arrière dans le sens opposé au sens d'insertion, est supérieur à l'angle de conicité dans sa région opposée, côté tête.

6. Agencement d'étanchéité selon l'une quelconque des revendications 1 à 5,
**caractérisé en ce que**
le cône d'étanchéité (7) présente des régions d'angle de conicité différent (18).

7. Agencement d'étanchéité selon la revendication 6,
**caractérisé en ce que**
le cône d'étanchéité (7), dans la région de son extrémité côté sortie, de plus grand diamètre, présente un angle de conicité (18) inférieur par rapport à sa région opposée.

8. Agencement d'étanchéité selon l'une quelconque des revendications 4 à 7,
**caractérisé en ce que**
la bague d'étanchéité (15) peut être déplacée par sollicitation en pression sur la région de l'interstice annulaire (14) qui débouche sur la région de l'interstice annulaire (14) de plus grand angle de conicité (17) et/ou de plus petit angle de conicité (18).

9. Agencement d'étanchéité selon l'une quelconque des revendications précédentes,
**caractérisé en ce que**
la surface d'appui (surface de fond 13) s'étend perpendiculairement à l'axe du cône d'étanchéité (7).

10. Agencement d'étanchéité selon l'une quelconque des revendications précédentes,
**caractérisé en ce que**
la partie d'étanchéité conique (6) est reliée par le biais d'une pièce intermédiaire (25) à une autre partie d'étanchéité conique (21) disposée avant elle et coaxiale avec elle, qui vient en prise dans un cône d'étanchéité (22) du côté du composant.

11. Agencement d'étanchéité selon la revendication 10,
**caractérisé en ce que**
la pièce intermédiaire (25) est située dans la région d'un espace de transition (espace de pression 2) qui est sollicité par une haute pression.

12. Agencement d'étanchéité selon la revendication 10 ou 11,
**caractérisé en ce que**
des interstices annulaires (14 ; 24) de section transversale rétrécissant dans des sens opposés sont limités par le biais des parties d'étanchéité conique (6 ; 21) situées de part et d'autre de la pièce intermédiaire (25) et des cônes d'étanchéité (7 ; 23) qui leur correspondent, et **en ce que** les bagues d'étanchéité (15 ; 23) situées dans les interstices annulaires (14 ; 24) sont sollicitées en pression dans des sens mutuellement opposés.

13. Agencement d'étanchéité selon l'une quelconque des revendications 10 à 12,
**caractérisé en ce que**
la pièce intermédiaire (25) présente un plus grand diamètre que la partie d'étanchéité conique supplémentaire (21) partant de la pièce intermédiaire (25), dans sa région de base se raccordant à la pièce intermédiaire (25).

14. Agencement d'étanchéité dans un système hydraulique haute pression, comprenant un espace de pression, un cône d'étanchéité en liaison avec l'espace de pression, et un corps d'étanchéité correspondant au cône d'étanchéité, sollicité en pression depuis l'espace de pression, pénétrant dans le cône d'étanchéité et comprenant une partie d'étanchéité conique, où, dans la position d'étanchéité, le cône d'étanchéité (22) et la partie d'étanchéité conique (21) pénétrant dans celui-ci forment entre eux un interstice annulaire (24) dont la section transversale annulaire se rétrécit dans le sens d'insertion de la partie d'étanchéité conique (21) et où, dans l'interstice annulaire (24), est disposée une bague d'étanchéité (23) serrée entre la partie d'étanchéité conique (21) et le cône d'étanchéité (22), sollicitée en pression dans le sens d'étendue de la partie d'étanchéité conique (21),
**caractérisé en ce que**
le cône d'étanchéité (22) s'élargit dans la direction de l'espace de pression (2).

15. Agencement d'étanchéité selon la revendication 14,
**caractérisé en ce que**
l'angle de conicité de la partie d'étanchéité conique (21) est inférieur à l'angle de conicité du cône d'étanchéité (22).

16. Agencement d'étanchéité selon la revendication 15,
**caractérisé en ce que**
l'angle de conicité de la partie d'étanchéité conique (21) et l'angle de conicité du cône d'étanchéité (22) présentent approximativement la même valeur, notamment sont égaux.

17. Agencement d'étanchéité selon l'une quelconque des revendications 14 à 16,
**caractérisé en ce que**
la partie d'étanchéité conique (21) présente des régions d'angles de conicité différents.

18. Agencement d'étanchéité selon la revendication 17,
**caractérisé en ce que**
l'angle de conicité dans l'extrémité côté base de la partie d'étanchéité conique (21), arrière dans le sens opposé au sens d'insertion, est supérieur à l'angle de conicité dans sa région opposée, côté tête.

19. Agencement d'étanchéité selon l'une quelconque des revendications 14 à 18,
**caractérisé en ce que**
le cône d'étanchéité (22) présente des régions d'angle de conicité différent.

20. Agencement d'étanchéité selon la revendication 19,
**caractérisé en ce que**
le cône d'étanchéité (22), dans la région de son extrémité côté sortie, de plus petit diamètre, présente un angle de conicité inférieur par rapport à sa région d'extrémité opposée.

21. Agencement d'étanchéité selon l'une quelconque des revendications 14 à 20,
**caractérisé en ce que**
la bague d'étanchéité (23) peut être déplacée par sollicitation en pression sur la région de l'interstice annulaire (24) qui débouche sur la région de l'interstice annulaire (24) de plus petit angle de conicité et/ou de plus grand angle de conicité.

22. Agencement d'étanchéité selon l'une quelconque des revendications 14 à 21,
**caractérisé en ce que**
la partie d'étanchéité conique (21) et/ou le cône d'étanchéité (22) sont pourvus d'un étage de butée radial pour la bague d'étanchéité (23).

23. Agencement d'étanchéité selon l'une quelconque des revendications précédentes,
**caractérisé en ce que**
la bague d'étanchéité (15 ; 23) présente une section transversale quadrilatérale, notamment rectangulaire.
